# EUROPEAN PATENT APPLICATION

(11) **EP 2 650 433 A1**
(43) Date of publication of application: **16.10.2013**
(21) Application number: 11847298.4
(22) Date of filing: 08.12.2011
(51) Int. Cl.: D21H 21/42, B42D 15/10

(54) **FORGERY PREVENTION MEMBER, FORGERY PREVENTION PAPER AND METHOD FOR PRODUCING SAME**

(30) Priority: 08.12.2010 JP 2010273369
(71) Applicant: Toppan Printing Co., Ltd., Taito-ku, Tokyo 110-0016 (JP)
(72) Inventor: MURAKAMI, Toru, Tokyo 110-0016 (JP); GOCHO, Satoshi, Tokyo 110-0016 (JP); NAKASHIBA, Michiya, Tokyo 110-0016 (JP); KUBO, Akira, Tokyo 110-0016 (JP)
(74) Representative: TBK
(86) International application number: PCT/JP2011/078470
(87) International publication number: WO 2012/077761

(57) **Abstract**

A high offset printability can be achieved and mutual adhesion of forgery preventing members during a papermaking process becomes less prone to occur. A method of manufacturing a forgery preventing member includes forming a first adhesive layer capable of adhering to paper, on one surface of a sheet substrate which provides a forgery preventing effect, forming a second adhesive layer capable of adhering to the paper, on the other surface of the sheet substrate, superimposing the sheet substrate and a first water-soluble sheet or unsized paper with the first adhesive layer being sandwiched therebetween, superimposing the sheet substrate and a second water-soluble sheet or unsized paper with the second adhesive layer being sandwiched therebetween, and cutting or punching the sheet substrate on which the first adhesive layer and the second adhesive layer are formed with the sheet substrate being sandwiched between the first water-soluble sheet or unsized paper and the second water-soluble sheet or unsized paper, to produce a fibrous or flaky forgery preventing member.

## Description

### Technical Field

The present invention relates to a forgery preventing sheet, i.e., a sheet having a forgery preventing effect, and a fibrous or flaky forgery preventing member usable in the manufacture of the forgery preventing sheet, and methods of manufacturing the same.

### Background Art

Various forgery preventing sheets manufactured from a stock containing cellulose fibers and fibrous or flaky members providing a forgery preventing effect are known.

For example, International Publication WO 2009/119879 describes a sheet containing fibrous members having a pearly luster. Japanese Patent No. 3075454 describes a sheet containing flaky members having a pearly luster. The pearly luster of the above-mentioned members of these sheets cannot be reproduced even when the sheets are copied by a color copying machine, or scanned by a scanner and the scanned images are printed out by using an inkjet printer. Accordingly, these sheets are suitably usable in printed matter required to have a forgery preventing measure.

A sheet containing circular flaky members having a diameter of 1 to 2 mm which are called planchettes is described in Shun Uemura, "Bank Notes of the World", Insatsu Choyokai Foundation (1987), p. 356. The planchettes are obtained from a sheet-like material such as colored paper or fluorescent color generating paper that emits light when irradiated with ultraviolet rays. This sheet was used as, e.g., a 50-dollar bill in Canada.

U.S. Patent No. 3565985 describes a special film called a "multilayered light interference film". The multilayered light interference film has a structure of alternately stacked, a hundred and a few ten plastic layers having different refractive indices, and shows an interference color derived from the structure. The multilayered light interference film is obtained by forming a multilayered structure by melt extrusion, and drawing the structure. AS the multilayered light interference film, "Aurora Film" (trade name) of Engelhard and "MLF Film" (trade name) of Teijin DuPont are known. Flaky members punched out of the multilayered light interference film are called glitters. A sheet containing the glitters was used as a 100-guilder bill in the Netherlands and a 200-peso bill in Mexico.

A sheet into which are mixed thread products called security threads having a good forgery preventing effect is also widely known. There are two types of sheet. One is an embedded sheet described in, e.g., Jpn. Pat. Appln. KOKOKU Publication No. 06-062030, having the thread products embedded between paper layers. The other is a sheet called "windowed thread inserted paper" described in, e.g., Japanese

Patent No. 2845197, having a window formed in the surface and the threaded products partially exposed to this window.

As the materials of the threads, various special films providing the forgery preventing effect are used. A typical example is a hologram film. The threads have an adhesive layer formed on their surfaces. In a papermaking step, therefore, the threads adhere to cellulose fibers forming the paper. As a result, the removal of the threads from the finished sheet is prevented.

### Disclosure of Invention

The above-described sheets are required to prevent the removal of the members providing the forgery preventing effect from the sheet during printing, in the stage of distribution, and the like. Various measures have been taken for this purpose.

For example, International Publication WO 2009/119879 describes the concomitant use of fibrous members having a pearly luster, i.e., optically coherent fibers, cellulose fibers, and binder fibers. The binder fibers play the role of preventing easy removal of the optically coherent fibers from the paper. This literature describes that as the binder fibers, use may be made of, e.g., ethylene-vinyl alcohol copolymer fibers, core-sheath type binder fibers, or divided type binder fibers.

This measure does not improve the adhesion of the optically coherent fibers themselves to the cellulose fibers. Therefore, a sufficient effect can not be achieved unless the addition amount of the binder fibers is increased to, normally, 10% or more. This increases the cost and, in addition, readily poses the problem that the binder fibers melt in a drying zone of a paper machine and contaminate the surface of a canvas or dryer.

Furthermore, International Publication WO 2009/119879 describes forming a resin layer covering at least one surface of the paper. This resin layer typically plays the role of covering the surface containing the optically coherent fibers to prevent easy removal of the optically coherent fibers contained in the surface region of the paper by, and the role of improving the flatness of the paper to facilitate, e.g., the formation of a printing layer. A transparent resin is typically used as the material of this resin layer. As the material of the resin layer, a polyester resin, a polyurethane resin, an acrylate ester resin, an acrylate ester copolymer resin such as a styrene-acrylate ester copolymer resin, a vinyl acetate resin, a polyacrylamide resin, a melamine resin, a urea resin, polyvinyl alcohol and its derivative, starch and its derivative, a cellulose derivative, and casein are used. The resin layer is formed by a size press apparatus of a paper machine, or a coater such as a gravure coater, roll coater, air knife coater, blade coater, or bar coater.

In this measure, the interference color of the optically coherent fibers may weaken with the coating of the paper with the transparent resin layer, so the thickness of the transparent resin layer must be minimized. However, such control is difficult. In addition, the cost rises because the additional step of coating the paper with the transparent resin layer is necessary after the papermaking step.

As to the sheet containing the planchettes or glitters, the planchettes or glitters may transfer to the blanket during high ink tack printing such as offset printing.

The present inventors have also discovered the following fact. When fibrous or flaky members are manufactured from a sheet-like material having adhesive layers on both of its surfaces by using a method such as cutting using a guillotine cutter or micro slitter, or punching, the frictional heat of the blade or the pressure sometimes melts or softens the adhesive layers, thereby adhering these members to each other. If paper is made by using such members as a part of the paper stock, the problem that these members exist in the form of a mass or they look connected to each other arises.

It is an object of the present invention to solve these problems. Specifically, it is an object of the present invention to achieve a high offset printability, i.e., a property of preventing easy removal of fibrous or flaky members providing a forgery preventing effect from a sheet when the sheet is subjected to offset printing, and prevent these members from adhering to each other when papermaking is carried out.

According to a first aspect of the present invention, there is provided a method of manufacturing a forgery preventing member, comprising forming a first adhesive layer capable of adhering to paper, on one surface of a sheet substrate which provides a forgery preventing effect, forming a second adhesive layer capable of adhering to the paper, on the other surface of the sheet substrate, superimposing the sheet substrate and a first water-soluble sheet or unsized paper, with the first adhesive layer being sandwiched therebetween, superimposing the sheet substrate and a second water-soluble sheet or unsized paper, with the second adhesive layer being sandwiched therebetween, and cutting or punching the sheet substrate on which the first adhesive layer and the second adhesive layer are formed, with the sheet substrate being sandwiched between the first water-soluble sheet or unsized paper and the second water-soluble sheet or unsized paper, to produce a fibrous or flaky forgery preventing member.

According to a second aspect of the present invention, there is provided a method according to the first aspect, wherein the sheet substrate has optical coherence.

According to a third aspect of the present invention, there is provided a method according to the first or second aspect, further comprising adhering the first water-soluble sheet or unsized paper to the sheet substrate by the first adhesive layer before the cutting or punching; and adhering the second water-soluble sheet or unsized paper to the sheet substrate by the second adhesive layer before the cutting or punching.

According to a fourth aspect of the present invention, there is provided a method of manufacturing a forgery preventing sheet, comprising forming a first adhesive layer capable of adhering to paper, on one surface of a sheet substrate which provides a forgery preventing effect, forming a second adhesive layer capable of adhering to the paper, on the other surface of the sheet substrate, superimposing the sheet substrate and a first water-soluble sheet or unsized paper, with the first adhesive layer being sandwiched therebetween, superimposing the sheet substrate and a second water-soluble sheet or unsized paper, with the second adhesive layer being sandwiched therebetween, cutting or punching the sheet substrate on which the first adhesive layer and the second adhesive layer are formed, with the sheet substrate being sandwiched between the first water-soluble sheet or unsized paper and the second water-soluble sheet or unsized paper, to produce a fibrous or flaky forgery preventing member, and carrying out papermaking by using the forgery preventing member, a papermaking fiber and a papermaking subsidiary material, as raw materials.

According to a fifth aspect of the present invention, there is provided a method according to the fourth aspect, further comprising adhering the first water-soluble sheet or unsized paper to the sheet substrate by the first adhesive layer before the cutting or punching, and adhering the second water-soluble sheet or unsized paper to the sheet substrate by the second adhesive layer before the cutting or punching.

According to a sixth aspect of the present invention, there is provided a method according to the fourth or fifth aspect, wherein the papermaking comprises producing a multilayered structure including a pair of surface layers formed by using the forgery preventing member, and an inner layer interposed between the surface layers.

According to a seventh aspect of the present invention, there is provided a fibrous or flaky forgery preventing member comprising a substrate which provides a forgery preventing effect, a pair of adhesive layers disposed on both surfaces of the substrate, and a pair of water-soluble sheets or unsized papers opposing each other with the substrate and the pair of adhesive layers being sandwiched therebetween, and joined to the adhesive layers, respectively.

According to a eighth aspect of the present invention, there is provided a forgery preventing sheet comprising one or more first layers each obtained from a paper stock containing a papermaking fiber, a papermaking subsidiary material, water and a fibrous or flaky forgery preventing member, the forgery preventing member including a substrate which provides a forgery preventing effect, a pair of adhesive layers formed on both surfaces of the substrate, and a pair of water-soluble sheets or unsized papers opposing each other with the substrate and the pair of adhesive layers being sandwiched therebetween, and joined to the adhesive layers, respectively.

According to a ninth aspect of the present invention, there is provided a forgery preventing sheet according to the eighth aspect, further comprising one or more second layers interposed between the pair of first layers.

According to a tenth aspect of the present invention, there is provided a forgery preventing sheet according to the eighth or ninth aspect, wherein the substrate has optical coherence.

### Brief Description of Drawings

FIG. 1 is a plan view schematically illustrating a forgery preventing sheet according to an embodiment of the present invention.
FIG. 2A is a sectional view schematically illustrating an example of a structure adoptable to the sheet illustrated in FIG. 1.
FIG. 2B is a sectional view schematically illustrating another example of the structure adoptable to the sheet illustrated in FIG. 1.
FIG. 3 is a sectional view schematically illustrating an example of a member providing a forgery preventing effect to the sheet illustrated in FIG. 1.
FIG. 4 is a sectional view schematically illustrating an example of a forgery preventing member usable in the manufacture of the sheet illustrated in FIG. 1.

### Modes for Carrying Out the Invention

Embodiments of the present invention will be described below with reference to the drawings. Throughout the drawings, elements exerting the same or similar function are labeled with the same reference symbol, and their repeated explanations are omitted.

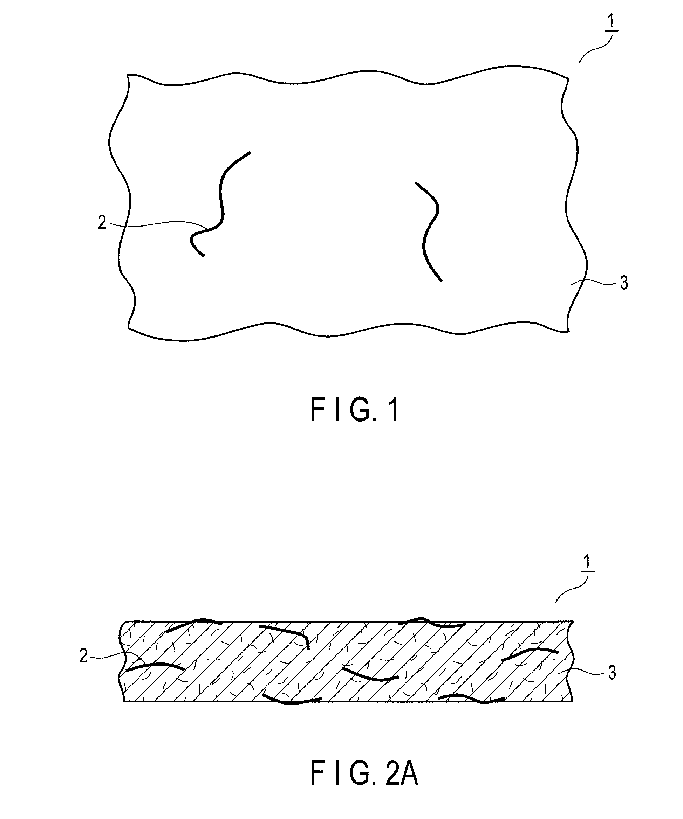

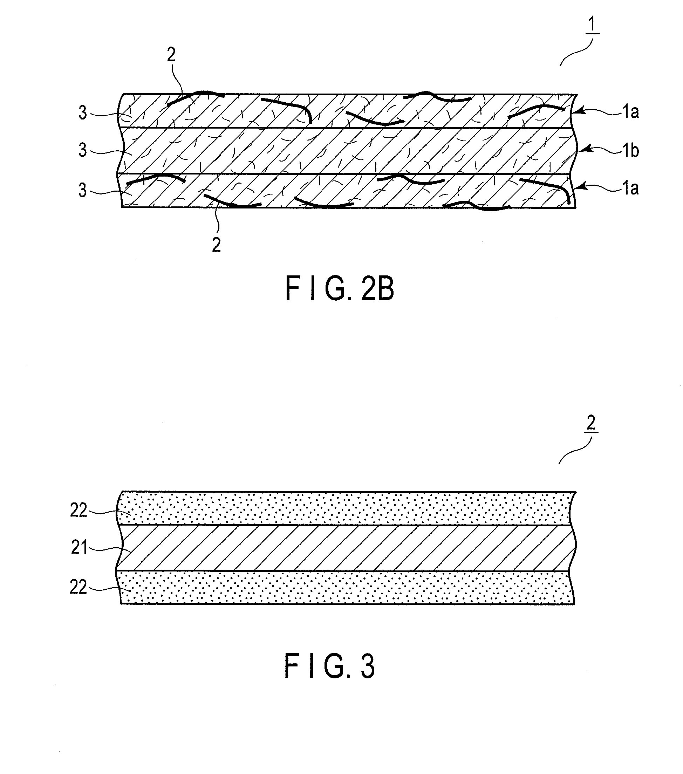

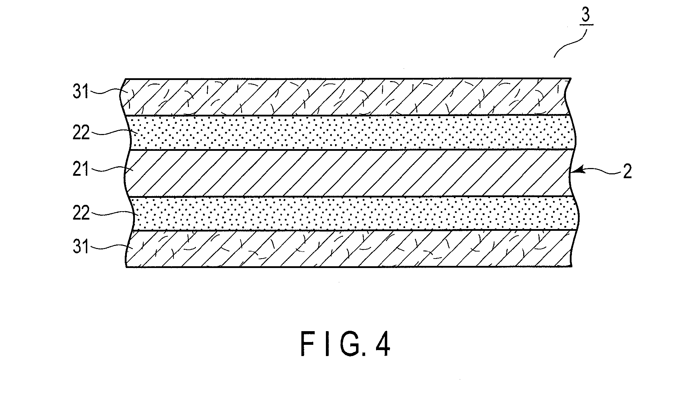

FIG. 1 is a plan view schematically illustrating a forgery preventing sheet according to an embodiment of the present invention. FIG. 2A is a sectional view schematically illustrating an example of a structure adoptable to the sheet illustrated in FIG. 1. FIG. 2B is a sectional view schematically illustrating another example of the structure adoptable to the sheet illustrated in FIG. 1. FIG. 3 is a sectional view schematically illustrating an example of a member for providing a forgery preventing effect to the sheet illustrated in FIG. 1. FIG. 4 is a sectional view schematically illustrating an example of a forgery preventing member usable in the manufacture of the sheet illustrated in FIG. 1.

A forgery preventing sheet 1 illustrated in FIG. 1 includes a sheet body 3, and fibrous or flaky forgery preventing members 2. The sheet body 3 is constituted of papermaking fibers, typically, cellulose fibers, and a papermaking subsidiary material.

The sheet 1 illustrated in FIG. 2A has a single-layered structure. In the structure illustrated in FIG. 2A, the forgery preventing members 2 are almost evenly distributed over the entire sheet 1.

The sheet 1 illustrated in FIG. 2B has a multilayered structure including an inner layer 1b, and a pair of surface layers 1a sandwiching the inner layer 1b In the structure illustrated in FIG. 2B, the forgery preventing members 2 are almost evenly distributed over the entire surface layers 1a and 1b, respectively.

The forgery preventing member 2 is, e.g., fibrous. The member 2 may also be a flake having an arbitrary shape, e.g., a circular or elliptical shape, or a polygonal shape such as a square, rectangular, rhombic, pentagonal, or hexagonal shape.

Note that the term "fibrous" used for the forgery preventing member 2 means that when the member 2 is viewed in its thickness direction, the member 2 has a short side having a smaller length (width), and a long side having a larger length. Usually, the length of the short side is set at about 0.05 to 2 mm, and that of the long side is set at about 5 to 20 mm. Note also that the size of a flake is set at about 0.5 to 5 mm.

As illustrated in FIG. 3, the forgery preventing member 2, which the sheet 1 contains, includes a substrate 21, and a pair of adhesive layers 22 formed on the both surfaces of the substrate 21.

The substrate 21 is manufactured from a sheet substrate providing the forgery preventing effect, e.g., a polymer film, paper, or nonwoven fabric so prepared as to provide the forgery preventing effect. The adhesive layers 22 adhere the substrate 21 to the papermaking fibers in a drying zone of a paper machine, thereby preventing the removal of the forgery preventing members 2 from the sheet 1. Note that the substrate 21 and adhesive layers 22 will be explained later in detail.

The present inventors made extensive studies, and have found that the manufacture of the forgery preventing members 2 poses the following problem. When manufacturing the forgery preventing members 2 by forming the adhesive layers on the two surfaces of the sheet substrate which provides the forgery preventing effect and cutting or punching the obtained stack, the frictional heat of the blade sometimes melts or softens the adhesive layers, or the pressure sometimes adheres the forgery preventing members 2 to each other. If paper is made by using such members 2 as a part of the paper stock, the problem that the members 2 exist in the form of a mass or they look connected to each other arises.

In this embodiment, therefore, the sheet substrate on the two surfaces of which the adhesive layers are formed is sandwiched between water-soluble sheets or unsized papers, and the sheet substrate sandwiched between the water-soluble sheets or unsized papers is cut or punched, thereby obtaining fibrous or flaky forgery preventing members. During cutting or punching, the water-soluble sheet or unsized paper prevents the above-mentioned problem caused by the blade touching the adhesive layer, or reduces the contact area between the blade and adhesive layer. In addition, during cutting or punching, the water-soluble sheet or unsized paper reduces the area of an exposed portion of the adhesive layer. Accordingly, this method can avoid the aforementioned problem.

In addition, when cutting or punching is performed while the water-soluble sheets or unsized papers is in contact with the adhesive layers by using this method, a forgery preventing member 2 further including the cut or punched water-soluble sheets or unsized papers 31 is obtained as illustrated in, e.g., FIG. 4. When bringing such forgery preventing member 2 into contact with water, e.g., when preparing a paper stock containing the forgery preventing members 2, papermaking fibers, a papermaking subsidiary material, and water, the water-soluble sheets dissolve in the water, and the unsized papers disintegrates into cellulose fibers. Therefore, the water-soluble sheets or unsized papers 31 exerts no adverse effect on papermaking.

Next, the materials of the forgery preventing sheet 1 and forgery preventing members 2 and methods of manufacturing the same will be explained.

In the manufacture of the forgery preventing sheet 1, a sheet substrate is first prepared.

The sheet substrate includes a polymer film, paper, or nonwoven fabric. The sheet substrate provides the forgery preventing effect. For example, the sheet substrate has undergone processing for providing the forgery preventing effect. As the sheet substrate, it is possible to use any well-known, sheet product having a good forgery preventing effect.

Examples of a polymer film usable as the sheet substrate are polymer films themselves having a good forgery preventing effect, including polyolefin films such as a polyethylene film and polypropylene film; a polyvinyl chloride film; polyester films such as a polyarylate film and polyethyleneterephthalate film; a polymethyl methacrylate film; a polycarbonate film; a polyimide film; a polyether sulfone film; a polysulfone film; a polystyrene film; a polyvinyl alcohol film; cellulose films such as a cellulose acetate film, cellulose diacetate film, cellulose triacetate film, and cellophane; a polymer film made of a liquid crystal polymer; and a multilayered light interference film. These polymer films may also contain, as an additive, a coloring agent, white inorganic pigment, antioxidant, antistatic agent, lubricant or a combination thereof. The thickness of the polymer film is normally 10 to 40 µm.

Paper usable as the sheet substrate is manufactured by using a paper machine from a paper stock containing papermaking fibers as a main component, various papermaking subsidiary materials, and a material providing the forgery preventing effect. As the papermaking fibers, cellulose fibers are typically used. As the cellulose fibers, a pulp is typically used. In addition to the cellulose fibers, the paper stock can also contain one or more of synthetic fibers, metal fibers, glass fibers, and carbon fibers. It is also possible to use a plurality of types of pulps. Practical examples are papermaking pulps such as Northern Bleached Kraft Pulp (NBKP), Laubholz Bleached Kraft Pulp (LBKP), Northern Bleached Sulfite Pulp (NBSP), and Thermo Mechanical Pulp (TMP). These pulps are beaten by using a beater or disk refiner, and a paper stock is prepared by adding papermaking subsidiary materials to the beaten pulps. Examples of the papermaking subsidiary materials are various fillers such as white clay, kaolin, calcium carbonate, titanium dioxide, and aluminum hydroxide; synthetic fibers; a dry strengthening agent; a wet strengthening agent; a sizing agent; a retention aid; an antifoaming agent; a coloring dye; a coloring pigment; a fluorescent brightening agent; and a fixing agent. It is also possible to mix, in the paper stock, a well-known material for providing the forgery preventing effect, e.g., fibers that emit fluorescence when irradiated with ultraviolet rays, or fine particles that emit fluorescence when irradiated with ultraviolet rays.

Paper is manufactured from the above-mentioned paper stock by using a well-known paper machine such as a Fourdrinier paper machine, cylinder paper machine, tanmo paper machine, or twin wire paper machine. The surface of the paper is coated with a sizing agent or paper-strengthening agent by using a size press apparatus or the like during the drying step. The basis weight of the paper is normally set at 20 to 200 g/m².

Nonwoven fabric used as the sheet substrate can be manufactured by, e.g., a wet method. The nonwoven fabric can also be manufactured by a well-known dry method such as a spunbond method, melt-blown method, spunlace method, needle punch method, or stitchbond method. Fibers as the material of the nonwoven fabric can also be used together with a substance providing the forgery preventing effect, e.g., fibers that emit fluorescence when irradiated with ultraviolet rays. The basis weight of the nonwoven fabric is normally set at 20 to 100 g/m².

Various kinds of processing can be made on the surface of the sheet substrate. For example, the surface of the paper can be coated with a coating solution made of a pigment such as kaolin, titanium oxide or calcium carbonate, an adhesive such as starch, styrene-butadiene rubber (SBR) latex, methacrylate ester-butadiene rubber (MBR) latex, or acrylic emulsion, and other coating subsidiary materials, by using a coater such as a blade coater, air knife coater, or roll coater. The coating amount is normally set at 3 to 20 g/m² on the dry mass basis.

Processing for preventing forgery can be made on the surface of the sheet substrate. For example, ink containing a pearl pigment, a color pigment, a cholesteric liquid crystal pigment, a magnetic powder, a metal powder, or a dye or pigment that emits fluorescence when irradiated with ultraviolet rays, a binder, and other additives can be printed by using a well-known printing method such as an offset printing method, plate printing method, relief printing method, screen printing method, gravure printing method, or flexo printing method.

It is also possible to combine a plurality of kinds of inks. For example, when using a pearl pigment, it is possible to prepare two or more kinds of inks by using pigments having different interference colors, and print stripe patterns. Similar patterns can also be printed by using, instead of the pearl pigment, fluorescent materials of two or more colors that emit fluorescence when irradiated with ultraviolet rays. Patterns can also be printed by using a combination of two or more kinds of pigments, e.g., a combination of a pearl pigment and metal powder, or a combination of a magnetic powder and color pigment. Furthermore, the sheet substrate itself can be dyed by using a well-known method.

When the sheet substrate includes a film, it is possible to form, e.g., a hologram, metal vapor deposition layer, multilayered vapor deposition layer, or cholesteric liquid crystal layer on the film. Patterning such as demetallized processing can also be made on the metal vapor deposition layer or multilayered vapor deposition layer. Patterns of a fluorescent material, magnetic powder, or pearl pigment can be printed on the film or these layers. In particular, a forgery preventing member obtained by using an optically coherent substrate that changes the intensity or color of reflected light or scattered light in accordance with a viewing angle provides a good forgery preventing effect to the sheet, and shows a high visibility.

Then, adhesive layers capable of adhering to paper are formed on the both surfaces of the sheet substrate.

The adhesive layers melt or soften in the drying zone of a paper machine, and adhere to the papermaking fibers as a main component of paper. As the adhesive, it is possible to use known adhesives that soften, melt or swell when heated by the dryer of a paper machine, and strongly adhere to the papermaking fibers. Examples are water-based and solvent-based known adhesives such as a polyvinyl acetate resin-based adhesive, polyvinyl chloride resin-based adhesive, polyester resin-based adhesive, polyacrylic ester resin-based adhesive, ethylene-vinyl acetate copolymer resin-based adhesive, and polyvinyl alcohol resin-based adhesive. Adhesive layers are formed by coating the surfaces of the substrate with one or more of these adhesives by using a known coater such as a roll coater or gravure coater. The coating amount is normally 0.1 to 10 g/m² on the dry mass basis. To improve the adhesion between the sheet substrate and adhesive layers, a corona discharge processing or primer agent coating can be made before the adhesive coating. When using a thermoplastic adhesive, it is possible to preferably use a resin having a glass transition point of -30°C to 50°C, and more preferably, a resin having a glass transition point of -20°C to 30°C. If the glass transition point is less than -30°C, the adhesive layers have adhesiveness even at room temperature. If the glass transition point exceeds 50°C, the adhesive layers hardly adhere to the papermaking fibers in the dryer zone of a paper machine.

The solubility of a water-soluble or hot water-soluble resin such as a polyvinyl alcohol resin strongly depends on the polymerization degree and saponification degree, particularly, the saponification degree. For example, a resin having a saponification degree of 88% or less completely dissolves in water at about 20°C. By contrast, to dissolve a resin having a saponification degree of 97% in water, the water temperature must be increased to about 50°C or more. Also, to dissolve a completely saponified resin in water, the water temperature must be increased to about 80°C or more. It is preferable to use a resin having a minimum dissolution temperature, i.e., a hot water dissolution temperature of 60°C to 80°C. If a resin having a hot water dissolution temperature of less than 60°C is used, the resin may excessively swell or dissolve in the drying zone of a papermaking step. Also, if the dissolution temperature of a resin exceeds 80°C, high-temperature heating is necessary to prepare a paper stock from collected spoilage or waste paper. Such heating is difficult and dangerous. Note that when using a polymer film as the sheet substrate and a polyvinyl alcohol resin-based adhesive as the adhesive, a well-known primer agent layer made of a polyurethane resin or the like can be formed between them in order to improve the affinity between them.

After the adhesive layers are formed on the both surfaces of the sheet substrate, the sheet substrate is sandwiched between unsized papers or water-soluble sheets. It is also possible to form an adhesive layer on one surface of the sheet substrate, superpose the sheet substrate and the unsized paper or water-soluble sheet with this adhesive layer being sandwiched between them, form another adhesive layer on the other surface of the sheet substrate, and superpose the sheet substrate and the unsized paper or water-soluble sheet with this adhesive layer being sandwiched between them.

When manufacturing the forgery preventing members 2, the unsized paper or water-soluble sheet plays a role of preventing the above-described problem, i.e., preventing the forgery preventing members 2 from directly adhering to each other. Note that even when the unsized paper or water-soluble sheet adheres to the adhesive, the unsized paper or water-soluble sheet disintegrates or dissolves when added to the paper stock for manufacturing the forgery preventing sheet 1. Accordingly, the use of the unsized paper or water-soluble sheet poses no problem.

The unsized paper is, e.g., paper containing no sizing agent. The unsized paper has a characteristic that it decomposes into cellulose fibers within an extremely short time. As will be explained below, the unsized paper is manufactured from a paper stock containing cellulose fibers as a main component by using a paper machine.

As the papermaking fibers, a pulp is typically used. It is also possible to use a plurality of types of papermaking fibers. Practical examples are papermaking pulps such as Northern Bleached Kraft Pulp (NBKP), Laubholz Bleached Kraft Pulp (LBKP), Northern Bleached Sulfite Pulp (NBSP), and Thermo Mechanical Pulp (TMP). The unsized paper is manufactured by, e.g., the following method. First, a pulp is beaten to have a freeness of, usually, 200 to 500 mL C.S.F. by using a beater or disk refiner. Then, a paper stock containing cellulose fibers obtained by the beating is prepared basically without using any other papermaking subsidiary material. Thereafter, unsized paper having a basis weight of, e.g., 20 to 80 g/m² is manufactured from the above paper stock by using a well-known paper machine such as a Fourdrinier paper machine, cylinder paper machine, tanmo paper machine, or twin wire paper machine.

So-called water-disintegratable paper can also be used as the unsized paper. The water-disintegratable paper means paper having the properties that in a dried state, the adhesive force between the fibers forming the paper is strong enough to maintain the form of paper, but, when the paper is dipped in water, the adhesive force extremely decreases, and the paper readily decomposes or disperses if an external force is applied. As the water-disintegratable paper, it is possible to use any water-soluble paper disclosed in Jpn. Pat. Appln. KOKAI Publication Nos. 2006-002296, 2006-307384, 2006-180983, 2006-002277, and the like.

In the manufacture of the unsized paper, it is preferable to use a pulp having a short fiber length. An example of the pulp having a short fiber length is the above-mentioned Laubholz Bleached Kraft Pulp (LBKP). The fiber length of a softwood pulp is normally about 1.5 to 5.5 mm. By contrast, the fiber length of a hardwood pulp is normally about 0.5 to 2.5 mm. This fiber length is shorter than the normal length of the fibrous forgery preventing members 2. When performing cutting or punching described later, therefore, this advantageously decreases the rate of the pulp fibers adhering to the cut section of the adhesive layer by the pressure or frictional heat.

When manufacturing the fibrous forgery preventing members 2, it is preferable to use the unsized paper having a high aspect ratio, and perform cutting or punching such that the longitudinal direction of the unsized paper matches the long-side direction of the forgery preventing members 2. This decreases the rate of the pulp fibers adhering to the cut section of the adhesive layer by the pressure or frictional heat.

The water-soluble sheet is a water-soluble film or sheet, and dissolves or disintegrates in water. Examples of a well-known, water-soluble film or sheet are a cellulose-based, water-soluble film or sheet such as sodium salt of carboxymethylcellulose, a polyvinyl alcohol-based, water-soluble film or sheet, a polyether-based, water-soluble film or sheet such as polyethyleneoxide, and a polysaccharide-based, water-soluble film or sheet such as pullulan. Any of these films or sheets can be used in the present invention.

A typical example of the water-soluble sheet is water-soluble paper. As the water-soluble paper, it is possible to use, e.g., paper manufactured by a method (e.g., Jpn. Pat. Appln. KOKOKU Publication No. 40-968) in which carboxymethylcellulose is mixed in a papermaking material such as a pulp, making paper therefrom and converting the carboxymethylcellulose into its alkali metal salt by an alkali agent. As the water-soluble paper, it is also possible to use water-dispersible, water-soluble paper (Japanese Patent No. 2549159) manufactured by incorporating, into fibers such as wood pulp fibers, an alkali metal salt of carboxymethylcellulose, and one or more salts selected from the group consisting of water-soluble salts of an alkaline earth metal, manganese, zinc, cobalt and nickel. The thickness of the water-soluble film is usually 10 to 50 µm. The basis weight of the water-soluble paper is usually 30 to 80 g/m².

Examples of the method of superposing the unsized paper or water-soluble sheet on the adhesive layer will be described below.

### Method A1:

The unsized paper or water-soluble sheet and the sheet substrate on the both surfaces of which the adhesive layers are formed are cut into an appropriate size. Then, these materials are superimposed by, e.g., manual procedures such that each cut sheet substrate is sandwiched between a pair of the cut unused paper or water-soluble sheets.

### Method A2:

Two or more rolls of the unsized paper or water-soluble sheet and one or more rolls of the sheet substrate having the adhesive layers formed on the both surfaces are prepared. Then, the unsized paper or water-soluble sheet and the sheet substrate are fed from these rolls, and superimposed such that each sheet substrate is sandwiched between the unsized paper or water-soluble sheets. After that, the obtained multilayered structure is cut by using a cutter or punched.

### Method A3:

First, the both surfaces of the sheet substrate are coated with the adhesive by using a gravure coater/laminator including a floating dryer zone. Then, in the laminator section, the unsized paper or water-soluble sheets are fed from rolls, and weakly adhered on the both surfaces of the sheet substrate. After that, the obtained multilayered structure is passed through cooling rolls, and subsequently wound around a roll. In addition, this multilayered structure is cut by using a cutter or punched.

As described above, any method can be adopted as long as the adhesive layer formed on the surface of the sheet substrate is not brought into direct contact with the adhesive layer formed on the surface of another sheet substrate.

In methods A2 and A3, the unsized paper or water-soluble sheets are overlaid, by weak adhesion or no adhesion, on the adhesive layers formed on the both surfaces of the sheet substrate, and the obtained multilayered structure is cut or punched. This cutting or punching can be performed by using any known method. Typical examples of the method will be described below.

### Method B1:

A cutter called a guillotine including a vertically movable blade is used. This method can form the forgery preventing members 2 into fibrous members, and also flaky members such as rectangular and square members.

### Method B2:

A micro slitter is used. This method can also form the forgery preventing members 2 into fibrous members, and also flaky members such as rectangular and square members.

### Method B3:

A punching machine including a punching mechanism is used. This method can form the forgery preventing members into flaky members such as circular and hexagonal members.

### Method B4:

This method manufactures flaky forgery preventing members 2 by performing punching by using a rotary cutter.

### Method B5:

This method manufactures flaky forgery preventing members 2 by using a feeding mechanism that intermittently feeds the substrate, and a punching apparatus including a plurality of blades. These blades include a plurality of first blades that extend in the feeding direction of the feeding mechanism and are arranged in the widthwise direction perpendicular to the feeding direction, and a second blade installed after the first blades and extending in the widthwise direction. This method can manufacture square or rectangular forgery preventing members. Note that by changing the layout or the like of these blades, it is also possible to manufacture forgery preventing members having a shape other than the square or rectangle, e.g., forgery preventing members having the shape of a triangle, rhombus, pentagon, hexagon, star, circle, or crescent.

In methods A2 and A3, the adhesive layers are protected from contacting other articles by the unsized paper or water-soluble sheets. When manufacturing the forgery preventing members 2 by using these methods, therefore, the adhesive layers neither melt nor soften by the frictional heat of the blade, and the forgery preventing members 2 do not adhere to each other by the pressure.

Next, the manufacture of the forgery preventing sheet 1 using the forgery preventing members 2 will be explained.

First, a paper stock containing one or more pulps as a main component and a papermaking subsidiary material is prepared by a conventional method. As the pulps, it is possible to use wood pulps such as Northern Bleached Kraft Pulp (NBKP), Laubholz Bleached Kraft Pulp (LBKP), Northern Bleached Sulfite Pulp (NBSP), and Thermo Mechanical Pulp (TMP); non-wood pulps such as a cotton pulp, hemp pulp, and straw pulp; or a mixture thereof. Examples of the papermaking subsidiary material are fillers such as white clay, kaolin, calcium carbonate, titanium dioxide, and aluminum hydroxide; a sizing agent such as a rosin-based sizing agent; a dry strength agent such as a polyacrylamide-based dry strength agent; a wet strength agent such as a polyamide epichlorohydrin resin; a fixing agent; a retention aid; a drainage aid; an antifoaming agent; or a combination thereof. The freeness of the paper stock is set at, e.g., 550 to 250 mL C.S.F.

The forgery preventing sheet 1 can be manufactured by using the above-mentioned paper stock or another paper stock as will be explained below.

### Method C1:

First, the forgery preventing members 2 are mixed in the above-described paper stock. From the paper stock thus obtained, a sheet is made by using a paper machine such as a Fourdrinier paper machine, cylinder paper machine, or tanmo paper machine.

### Method C2:

The forgery preventing members 2 are sprinkled over a web obtained from the above-described paper stock at the wet part or wire part of a Fourdrinier paper machine.

### Method C3:

The above-described paper stock is supplied from a flow box to a Fourdrinier of a Fourdrinier paper machine, and a paper stock containing the forgery preventing members 2 is discharged toward the Fourdrinier from a plurality of nozzles arranged in the widthwise direction in a position immediately before or after the slice.

### Method C4:

Immediately before the press roll of a paper machine such as a Fourdrinier paper machine, cylinder paper machine or tanmo paper machine, the forgery preventing members 2 are sprinkled over wet paper obtained from the above-described paper stock.

### Method C5:

A web obtained from the above-described paper stock is coated with a coating solution containing the forgery preventing members 2 by size press coating by using a paper machine such as a Fourdrinier paper machine, cylinder paper machine or tanmo paper machine. Method C6:

In the manufacture of combination paper performed by using a cylinder paper machine having a multi-bath structure, a paper layer as an inner layer is formed from the abovementioned paper stock, and a paper layer as an outermost layer or surface layer is formed from a paper stock containing the forgery preventing members 2.

### Method C7:

At a position immediately before the cylinder of a cylinder paper machine enters a paper stock and/or a position immediately before the cylinder comes out from the paper stock, a paper stock containing the forgery preventing members 2 is discharged toward the cylinder from a plurality of nozzles arranged in the widthwise direction.

In these methods, it is also possible during papermaking to coat the web with, e.g., starch, polyvinyl alcohol, or various surface sizes by using a size press apparatus or the like, in order to improve the size degree or surface strength. In addition, the surface smoothness is appropriately improved as needed by performing a machine calendering process or super-calendering process.

It is also possible to add, to the paper stock, a well-known forgery preventing material such as fibers or particles that emit fluorescence when irradiated with ultraviolet rays, and a forgery preventing taggant. Also, it is possible to properly mix forgery preventing threads in the sheet, or form a watermark on the sheet.

When the forgery preventing members 2 have optical characteristics such as optically coherence or metallic luster, it is usually impossible to observe clear optical characteristics, e.g., a bright interference color unless the forgery preventing members 2 are distributed on or near the surface of the sheet 1. In such a case, therefore, a method by which the forgery preventing members 2 are distributed on or near the surface of the sheet 1 is preferably used in papermaking. As an example, it is preferable to use a cylinder paper machine including three or more baths, and manufacture a combination sheet including a pair of surface layers containing the forgery preventing members 2, and an inner layer interposed between the surface layers and containing no forgery preventing members 2.

After papermaking, a resin coating layer can be formed on the surface of the sheet 1. This makes it possible to further increase the adhesion of the forgery preventing members 2 to the sheet 1, and increase the effect of preventing the removal of the forgery preventing members 2 during printing. It is also possible to improve the transfer foil aptitude, e.g., the adhesion strength of a foil. The resin is preferably transparent, and it is possible to use known resins such as a polyester resin, a polyurethane resin, an acrylic ester copolymer resin, a styrene-acrylate ester copolymer resin, a vinyl acetate resin, a polyacrylamide resin, a melamine resin, a urea resin, polyvinyl alcohol and its derivatives, starch and its derivatives, a cellulose derivative, and casein. The coating amount of the resin is preferably 0.1 to 5 g/m² on the dry mass basis.

As a coater for forming the resin coating layer, it is possible to use a water-based or organic solvent-based material coater such as a gravure coater, roll coater, air knife coater or blade coater, or a gravure press.

It is also possible to obtain forgery preventing printed matter by performing processing such as pattern printing, forgery preventing printing, transfer of, e.g., a hologram having the forgery preventing effect, or laser perforation, on the surface of the forgery preventing sheet 1 manufactured as described above.

Practical examples of the present invention will be described below.

### <Example 1>

A roll of an 18-µm thick multilayered light interference film (trade name: "Aurora Film" available from Engelhard) made of a multilayered film including a polyethyleneterephthalate resin layer and acrylic resin layer was prepared as a sheet substrate. This film looks red when reflected light is observed, and looks cyan, a complementary color of red, when transmitted light is observed. Since the film has such property, forgery preventing members manufactured from the film have the same property. A forgery obtained by, e.g., color-copying such forgery preventing members cannot reproduce the colors of the authentic product. Accordingly, the abovementioned forgery preventing members provide a good forgery preventing effect.

Then, the wettability index of the surface of the abovementioned film was increased by carrying out a corona discharge processing on the film. Subsequently, the surface was coated with a coating solution containing an adhesive. The adhesive used can adhere to papermaking fibers forming paper by softening or melting in the drying zone of a paper machine. More specifically, a polyester-based, heat-sensitive adhesive manufactured under the trade name: "Vylon 2310" by TOYOBO and having a glass transition temperature of 26°C was used as the adhesive. The coating solution was prepared by mixing 150 parts by mass of the adhesive, a proper amount of an isocyanate-based hardener, 300 parts by mass of toluene, and 200 parts by mass of methyl ethyl ketone. The film surface was coated with 3 g/m² of the coating solution on the dry mass basis by using a gravure coater/laminator.

Subsequently, in this gravure coater/laminator, water-soluble paper was laminated on the film on one surface of which the adhesive layer was formed as described above. More specifically, water-soluble paper manufactured under the trade name: "30CD-2" by NIPPON PAPER PAPYLIA and having a basis weight of 30 g/m² was used. This water-soluble paper was fed from a roll and supplied together with the aforementioned film to a combiner roll for lamination. Then, these materials were bonded by pressure at a heating temperature of 80°C, and taken up to a roll.

The film laminated with the water-soluble paper as described above was fed from the roll, and an adhesive layer was formed by the same method as above on the surface opposite to the surface on which the water-soluble paper was laminated. Subsequently, this film and water-soluble paper were laminated by the same method as above, and taken up to a roll.

Thus, roll paper having a multilayered structure of "water-soluble paper/adhesive layer/multilayered light interference film/adhesive layer/water-soluble paper" was obtained.

Then, this roll paper was cut into sheets having a predetermined size by using a sheet cutter, and these sheets were piled up. Subsequently, the piled sheets were cut into a width of 1.0 mm by using a cutter called a guillotine including a vertically movable blade. A bundle thus obtained was further cut into a length of 4 mm by using the same guillotine. As described above, a large amount of 1.0-mm wide x 4-mm long flaky forgery preventing members were manufactured.

Note that the adhesive layers of some forgery preventing members weakly adhered to the water-soluble paper of some forgery preventing members at the positions of their sections due to the pressure applied by the edge of the blade during cutting and the frictional heat generated during cutting. When these forgery preventing members were placed in water, however, the water-soluble paper dissolved in the water, and the forgery preventing members dispersed.

Then, a mixture containing 30 parts by mass of NBKP (Northern Bleached Kraft Pulp and 70 parts by mass of LBKP (Laubholz Bleached Kraft Pulp) was beaten into 360 mL C.S.F. by using a refiner. A paper stock was prepared by adding, to this mixture, 15 parts by mass of kaolin, 0.5 parts by mass of a paper-strengthening agent, 1.0 part by mass of a sizing agent, and an appropriate amount of aluminum sulfate. As the paper-strengthening agent, "Polystron 117" (trade name) manufactured by ARAKAWA CHEMICAL INDUSTRIES was used. As the sizing agent, "Sizepine E" (trade name) manufactured by ARAKAWA CHEMICAL INDUSTRIES was used. This paper stock will be called a "first paper stock" hereinafter.

Subsequently, the abovementioned forgery preventing members were added to the first paper stock. The addition amount of the forgery preventing members was 1.5 mass% with respect to the dry mass of the sheet. A paper stock thus obtained will be called a "second paper stock" hereinafter.

Then, four-layered combination paper was manufactured by using the first and second paper stocks. More specifically, a four-bath cylinder paper machine including first to fourth baths was used. The second paper stock was supplied to the first and fourth baths. The first paper stock was supplied to the second and third baths. A web including four paper layers sequentially formed by the first to fourth baths was subjected to drying in a first dryer part, size press, and drying in a second dryer zone. In the size press, the web was coated with a 5% aqueous solution of polyvinyl alcohol. As the polyvinyl alcohol, "KURARAY PVA117" (trade name) manufactured by KURARAY was used. In drying in the first and second dryer parts, a multicylinder dryer was used.

As described above, the four-layered combination paper which had a basis weight of 100 g/m² and in which each paper layer had a basis weight of 25 g/m² was obtained. In this sheet, the inner layers contained no forgery preventing members, and only the surface layers contained the forgery preventing members.

When this sheet was copied by a color copying machine, the copy did not exhibit the interference colors of the forgery preventing members. Accordingly, it was possible to clearly distinguish between them (the sheet and copy) by visual judgment.

Then, the offset printability was tested by using this sheet. Consequently, a phenomenon in which the forgery preventing members removed to a blanket did not occur.

### <Comparative Example>

Forgery preventing members were manufactured following the same procedures as in Example 1 except that no adhesive layers were formed. Then, a sheet was manufactured following the same procedures as in Example 1 except that these forgery preventing members were used.

The offset printability was tested in the same manner as in Example 1 by using this sheet. Consequently, a phenomenon in which the forgery preventing members removed to a blanket occurred.

The forgery preventing members and forgery preventing sheet explained above are preferably usable in applications such as banknote paper, gift certificate paper, stock certificate paper, credit paper, check paper, passport paper, paper for various tickets, passenger ticket paper, and brand protection label paper. The forgery preventing sheet can be used singly, and can also be used as it is supported by another material. In the latter case, the forgery preventing sheet can be used in the form of a card obtained by adhering the sheet to another material, e.g., paper.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A method of manufacturing a forgery preventing member, comprising:
forming a first adhesive layer capable of adhering to paper, on one surface of a sheet substrate which provides a forgery preventing effect;
forming a second adhesive layer capable of adhering to the paper, on the other surface of the sheet substrate;
superimposing the sheet substrate and a first water-soluble sheet or unsized paper, with the first adhesive layer being sandwiched therebetween;
superimposing the sheet substrate and a second water-soluble sheet or unsized paper, with the second adhesive layer being sandwiched therebetween; and
cutting or punching the sheet substrate on which the first adhesive layer and the second adhesive layer are formed, with the sheet substrate being sandwiched between the first water-soluble sheet or unsized paper and the second water-soluble sheet or unsized paper, to produce a fibrous or flaky forgery preventing member.

2. The method according to claim 1, wherein the sheet substrate has optical coherence.

3. The method according to claim 1 or 2, further comprising:
adhering the first water-soluble sheet or unsized paper to the sheet substrate by the first adhesive layer before the cutting or punching; and
adhering the second water-soluble sheet or unsized paper to the sheet substrate by the second adhesive layer before the cutting or punching.

4. A method of manufacturing a forgery preventing sheet, comprising:
forming a first adhesive layer capable of adhering to paper, on one surface of a sheet substrate which provides a forgery preventing effect;
forming a second adhesive layer capable of adhering to the paper, on the other surface of the sheet substrate;
superimposing the sheet substrate and a first water-soluble sheet or unsized paper, with the first adhesive layer being sandwiched therebetween;
superimposing the sheet substrate and a second water-soluble sheet or unsized paper, with the second adhesive layer being sandwiched therebetween;
cutting or punching the sheet substrate on which the first adhesive layer and the second adhesive layer are formed, with the sheet substrate being sandwiched between the first water-soluble sheet or unsized paper and the second water-soluble sheet or unsized paper, to produce a fibrous or flaky forgery preventing member; and
carrying out papermaking by using the forgery preventing member, a papermaking fiber and a papermaking subsidiary material, as raw materials.

5. The method according to claim 4, further comprising:
adhering the first water-soluble sheet or unsized paper to the sheet substrate by the first adhesive layer before the cutting or punching; and
adhering the second water-soluble sheet or unsized paper to the sheet substrate by the second adhesive layer before the cutting or punching.

6. The method according to claim 4 or 5, wherein the papermaking comprises producing a multilayered structure including a pair of surface layers formed by using the forgery preventing member, and an inner layer interposed between the surface layers.

7. A fibrous or flaky forgery preventing member comprising:
a substrate which provides a forgery preventing effect;
a pair of adhesive layers disposed on both surfaces of the substrate; and
a pair of water-soluble sheets or unsized papers opposing each other with the substrate and the pair of adhesive layers being sandwiched therebetween, and joined to the adhesive layers, respectively.

8. A forgery preventing sheet comprising one or more first layers each obtained from a paper stock containing a papermaking fiber, a papermaking subsidiary material, water and a fibrous or flaky forgery preventing member, the forgery preventing member including a substrate which provides a forgery preventing effect, a pair of adhesive layers disposed on both surfaces of the substrate, and a pair of water-soluble sheets or unsized papers opposing each other with the substrate and the pair of adhesive layers being sandwiched therebetween, and joined to the adhesive layers, respectively.

9. The forgery preventing sheet according to claim 8, further comprising one or more second layers interposed between the pair of first layers.

10. The forgery preventing sheet according to claim 8 or 9, wherein the substrate has optical coherence.
